# EUROPÄISCHE PATENTSCHRIFT

(11) **EP 2 288 538 B1**
(45) Veröffentlichungstag und Bekanntmachung des Hinweises auf die Patenterteilung: **02.01.2013**
(21) Anmeldenummer: 09761467.1
(22) Anmeldetag: 09.06.2009
(51) Int. Cl.: B64C 1/06, B60R 13/02

(54) **FLUGZEUGSYSTEMTRÄGERELEMENT**
AIRCRAFT SYSTEM CARRIER ELEMENT
ÉLÉMENT SUPPORT DE SYSTÈME POUR AVIONS

(30) Priorität: 10.06.2008 DE 102008027604; 10.06.2008 US 60221
(43) Veröffentlichungstag der Anmeldung: 02.03.2011
(73) Patentinhaber: Airbus Operations GmbH, 21129 Hamburg (DE)
(72) Erfinder: SZARSZEWSKI, Maik, 63927 Bürgstadt (DE); WEBER, Christoph, 88400 Biberach (DE); VOELKNER, Joachim, 89143 Blaubeuren/Erstetten (DE)
(74) Vertreter: Schicker, Silvia
(86) Internationale Anmeldenummer: PCT/EP2009/004150
(87) Internationale Veröffentlichungsnummer: WO 2009/149904

(56) Entgegenhaltungen:
- EP-A1- 1 510 454
- WO-A1-2008/022752
- DE-A1-102006 050 534
- GB-A- 2 272 749
- US-A1- 2002 145 236

## Beschreibung

Die Erfindung betrifft ein Systemträgerelement, das dazu vorgesehen ist, in einem Flugzeug zur Montage von zur Versorgung eines Flugzeugcompartments erforderlichen Leitungen sowie als Flugzeugcompartmentisolierung eingesetzt zu werden.

Ein wesentlicher Stand der Technik ist durch EP1510454 gegeben.

Zur Versorgung eines Flugzeugcompartments, beispielsweise eines Crew Rest Compartments erforderliche Systemleitungen, wie z.B. elektrische Leitungen, Sauerstoffleitungen oder Rohrleitungen der Klimaanlage werden derzeit üblicherweise mit Hilfe sogenannter Inserts an den Außenflächen der Flugzeugcompartmentwände befestigt. Die in der Regel aus Metall bestehenden und mit einem Innengewinde versehenen Inserts werden hierzu einzeln in entsprechenden Aufnahmen angeordnet, die in den die Flugzeugcompartmentwände bildenden Paneelen ausgebildet sind. Die Inserts können dann dazu genutzt werden, geeignete Befestigungsvorrichtungen zur Befestigung der Systemleitungen an den die Flugzeugcompartmentwände bildenden Paneelen mit den Paneelen zu verschrauben.

Die akustische Isolierung des Flugzeugcompartments erfolgt üblicherweise mit Hilfe sogenannter Schwerfolien, die vor der Montage der Befestigungsvorrichtungen zur Befestigung der Systemleitungen an den die Flugzeugcompartmentwände bildenden Paneelen in einem separaten Arbeitsschritt auf die Außenflächen der die Flugzeugcompartmentwände bildenden Paneele aufgeklebt werden. Die thermische Isolierung des Flugzeugcompartments wird schließlich durch Glaswollpakete realisiert, die ebenfalls in einem separaten Arbeitsschritt an den die Flugzeugcompartmentwände bildenden Paneelen mit den daran befestigten Systemleitungen angebracht werden.

Ein wesentlicher Nachteil der Befestigung der Systemleitungen mit Hilfe von Inserts besteht darin, dass die Positionierung der Inserts üblicherweise kundenspezifisch erfolgt. Infolge dessen müssen für jeden Kunden individuell gestaltet Paneele und Insertlayouts generiert werden. Darüber hinaus sind die an den Außenflächen der die Flugzeugcompartmentwände bildenden Paneele angebrachten Systemleitungen verhältnismäßig ungeschützt. Elektrische Versorgungsleitungen und Sauerstoffleitungen müssen daher häufig im Inneren des Compartments verlegt und mit entsprechenden Schutzabdeckungen versehen werden, was die Montage und Wartung der Leitungen erschwert und verlangsamt. Schließlich ist die Montage der akustischen und thermischen Isolierungen des Flugzeugcompartments in separaten Arbeitsschritten sehr zeit- und folglich kostenaufwändig.

Der Erfindung liegt die Aufgabe zugrunde, ein Flugzeugsystemträgerelement bereitzustellen, das eine einfache und schnelle Montage von zur Versorgung eines Flugzeugcompartments erforderlichen Leitungen sowie einer Flugzeugcompartmentisolierung ermöglicht.

Zur Lösung dieser Aufgabe umfasst ein erfindungsgemäßes Flugzeugsystemträgerelement einen aus einem schall- und wärmeisolierenden Material bestehenden Grundkörper. In dem Grundkörper sind ein mit einer Flugzeugklimaanlage verbindbarer und zur Versorgung eines Flugzeugcompartments vorgesehener Klimakanal sowie ein Leitungskanal zur Aufnahme von zur Versorgung Flugzeugcompartments vorgesehenen Leitungen ausgebildet. Der erfindungsgemäße Flugzeugsystemträger umfasst somit nicht nur einen integrierten Klimakanal sowie einen Leitungskanal zur Aufnahme der zur Versorgung des Flugzeugcompartments erforderlichen Systemleitungen, sondern fungiert überdies als Schall- und Wärmeisolierung für das Flugzeugcompartment. Um eine optimale Schall- und Wärmeisolierung zu erzielen, wird das erfindungsgemäße Flugzeugsystemträgerelement vorzugsweise an einer Außenfläche einer Flugzeugcompartmentwand angebracht. In dem Grundkörper des erfindungsgemäßen Flugzeugsystemträgerelements kann lediglich ein Klimakanal sowie lediglich ein Leitungskanal ausgebildet sein. Alternativ dazu ist es jedoch auch denkbar, in dem Grundkörper mehrere Klimakanäle und/oder mehrere Leitungskanäle vorzusehen. Ferner ist es denkbar, den Klimakanal und/oder den Leitungskanal in voneinander getrennte Abschnitte zu unterteilen.

Ein wesentlicher Vorteil des erfindungsgemäßen Systemträgerelements besteht darin, dass es nicht länger erforderlich ist, die Systemleitungen zur Versorgung des Flugzeugcompartments einzeln mit Hilfe von individuell zu positionierenden Inserts an einem eine Flugzeugcompartmentwand bildenden Paneel zu befestigen. Stattdessen kann das Flugzeugsystemträgerelement mit den zur Versorgung des Flugzeugcompartments vorgesehenen Leitungen zu einer eigenständig handhabbaren Baugruppe vormontiert und erst anschließend an einem eine Flugzeugcompartmentwand bildenden Paneel befestigt werden. Die Anzahl der an einem eine Flugzeugcompartmentwand bildenden Paneel vorzusehenden Anbindungspunkte, die in Form von Inserts oder anderen geeigneten Montagevorrichtungen gestaltet sein können, kann daher beträchtlich reduziert werden. Darüber hinaus ist es bei der Verwendung eines standardisierten Flugzeugsystemträgerelements lediglich erforderlich, an einem eine Flugzeugcompartmentseitenwand bildenden Paneel zur Befestigung des Flugzeugsystemträgerelements an dem Paneel geeignete Anbindungspunkte an standardisierten Positionen vorzusehen. Dadurch kann die Variantenvielfalt der zur Bildung von Flugzeugcompartmentwänden eingesetzten Paneele beträchtlich reduziert werden.

Ein weiterer Vorteil des erfindungsgemäßen Flugzeugsystemträgerelements besteht darin, dass durch den Einsatz eines erfindungsgemäßen Flugzeugsystemträgerelements auf eine separate akustische und thermische Isolierung des Flugzeugcompartments verzichtet werden kann. Darüber hinaus sind die in dem Leitungskanal aufgenommenen Systemleitungen gut vor äußeren Einwirkungen geschützt sind. Es ist daher nicht länger erforderlich, empfindliche Systemleitungen, wie z.B. elektrische Leitungen oder Sauerstoffleitungen, im Inneren des Flugzeugcompartments zu verlegen und mit separaten Abdeckungen zu versehen. Durch das erfindungsgemäße Systemträgerelement kann folglich die Montage der akustischen und thermischen Isolierung des Flugzeugcompartments sowie die Montage der zur Versorgung des Flugzeugcompartments erforderlichen Systemleitungen in erheblichem Maße vereinfacht werden.

Das erfindungsgemäße Flugzeugsystemträgerelement kann beispielsweise im Zusammenhang mit einem Crew Rest Compartment eingesetzt werden. Da ein Crew Rest Compartment mit Hilfe der Flugzeugklimaanlage klimatisiert werden muss und überdies eine Vielzahl von Systemleitungen, wie z.B. elektrische Leitungen und Sauerstoffleitungen zur Versorgung des Crew Rest Compartments erforderlich ist, kann das erfindungsgemäße Flugzeugsystemträgerelement die Montage dieser Komponenten in besonders vorteilhafter Weise beträchtlich vereinfachen. Überdies sorgt das erfindungsgemäße Systemträgerelement für die gewünschte akustische und thermische Isolierung des Crew Rest Compartments. Das erfindungsgemäße Flugzeugsystemträgerelement kann jedoch auch im Zusammenhang mit anderen Flugzeugcompartments eingesetzt werden, die in einem Ober- oder einem Unterflurbereich des Flugzeugs, aber auch im Bereich einer Flugzeugpassagierkabine angeordnet sein können.

Der Grundkörper des erfindungsgemäßen Flugzeugsystemträgerelements ist mehrteilig ausgebildet und umfasst eine Rückwand, die dazu vorgesehen ist, an einer Außenfläche einer Flugzeugcompartmentwand, d.h. an einer Außenfläche eines die Flugzeugcompartmentwand bildenden Paneels oder an Außenflächen mehrerer die Flugcompartmentwand bildender Paneele befestigt zu werden. Ferner umfasst der Grundkörper des erfindungsgemäßen Flugzeugsystemträgerelements eine lösbar an der Rückwand befestigte Leitungskanalabdeckung. Eine lösbar an der Rückwand befestigte Leitungskanalabdeckung ermöglicht einen raschen Zugang zu den in dem Leitungskanal aufgenommenen Systemleitungen, wodurch die Wartung dieser Leitungen beträchtlich vereinfacht wird.

Der Grundkörper des erfindungsgemäßen Flugzeugsystemträgerelements besteht vorzugsweise aus einem schall- und wärmeisolierenden Schaum. Das Schaummaterial des Grundkörpers kann anwendungsspezifisch in Abhängigkeit der geforderten Schall- und Wärmedämmeigenschaften des Flugzeugsystemträgerelements gewählt werden. Bei der Auswahl eines zur Herstellung des Grundkörpers des erfindungsgemäßen Flugzeugsystemträgerelements geeigneten Schaummaterials müssen jedoch die für den Flugzeugbau geltenden hohen Sicherheitsanforderungen berücksichtigt werden. Insbesondere muss ein zur Herstellung des Grundkörpers des erfindungsgemäßen Flugzeugsystemträgerelements geeignetes Schaummaterial eine hohe Brandresistenz aufweisen und im Brandfall zu einer lediglich geringen Rauchentwicklung führen. Beispielsweise kann der Grundkörper des erfindungsgemäßen Flugzeugsystemträgerelements aus einem PU (Polyurethan)-, einem PF (Phenolharz)- oder einem PMI (Polymethacrylimid)-Schaummaterial oder aus einem Holzmaterial, wie z.B. Baltek^{®} gefertigt werden. Neben seiner guten akustischen und thermischen Isolierwirkung zeichnet sich ein aus einem Schaummaterial bestehender Grundkörper durch ein geringes Gewicht aus.

Ferner kann der Grundkörper eine mit der Rückwand verbindbare Klimakanalabdeckung umfassen. Vorzugsweise ist sowohl die Rückwand als auch die Klimakanalabdeckung mit entsprechenden Klebeflächen versehen, so dass die Klimakanalabdeckung auf einfache und komfortable Art und Weise mit der Rückwand verklebt werden kann. Ein dreiteilig gestalteter Grundkörper mit einer Rückwand, einer Leitungskanalabdeckung sowie einer Klimakanalabdeckung ist verhältnismäßig einfach zu fertigen. Alternativ dazu kann der Grundkörper jedoch auch einteilig oder zweiteilig ausgeführt sein. Insbesondere kann ein die Rückwand und die Klimakanalabdeckung des Grundkörpers bildendes Bauteil einteilig ausgeführt sein.

In der Rückwand des Grundkörpers ist vorzugsweise mindestens eine Durchführung zum Führen einer zur Versorgung des Flugzeugcompartments vorgesehenen Leitung aus dem Flugzeugsystemträgerelement in das Flugzeugcompartment ausgebildet. Die Durchführung befindet sich vorzugsweise im Bereich des in dem Grundkörper ausgebildeten Leitungskanals. Falls gewünscht oder erforderlich, kann im Bereich der Durchführung ein geeignetes Dichtelement zur Abdichtung der Durchführung angeordnet sein. Im an einer Flugzeugcompartmentwand montierten Zustand des erfindungsgemäßen Flugzeugsystemträgerelements fluchten in der Rückwand des Flugzeugsystemträgerelementgrundkörpers ausgebildete Durchführungen vorzugsweise mit entsprechenden Durchführungen, die in der Flugzeugcompartmentwand vorgsehen sind.

Um Beeinträchtigungen einer Luftströmung durch den in dem Grundkörper des erfindungsgemäßen Flugzeugsystemträgerelements ausgebildeten Klimakanal zu vermeiden, weist eine Innenfläche des Klimakanals vorzugsweise eine Oberflächenrauhigkeit auf, die einen vorbestimmten Wert nicht überschreitet. Zur Realisierung einer gewünschten niedrigen Oberflächenrauhigkeit kann die Innenfläche des Klimakanals entsprechend oberflächenbearbeitet oder mit einer Beschichtung versehen sein. Eine auf eine Innenfläche des Klimakanals aufgebrachte Beschichtung kann auch dazu dienen, den Klimakanal abzudichten, was insbesondere dann vorteilhaft sein kann, wenn der Grundkörper aus einem porösen Schaummaterial besteht. Alternativ dazu kann in den Klimakanal jedoch auch ein dünnwandiges, beispielsweise aus einem Kunststoffmaterial bestehendes Rohr integriert sein.

Durch den in dem Grundkörper des erfindungsgemäßen Flugzeugsystemträgerelements ausgebildeten Leitungskanal kann eine Vielzahl von verschiedenen Systemleitungen geführt werden. Aus Sicherheitsgründen ist es jedoch erforderlich, bestimmte Leitungen, wie z.B. elektrische Leitungen oder Sauerstoffleitungen in einem bestimmten Abstand zu anderen Leitungen zu verlegen. In dem Leitungskanal ist daher vorzugsweise eine Mehrzahl von Aufnahmen zur Anbringung von Leitungsbefestigungseinrichtungen angeordnet, die dazu dienen, geeignete Einrichtungen zur Befestigung der durch den Leitungskanal geführten Leitungen in dem Leitungskanal anzubringen. Die Aufnahmen können beispielsweise aus einem Kunststoffmaterial bestehen und so geformt und dimensioniert sein, dass sie eine Verlegung der durch den Leitungskanal geführten Leitungen in einem gewünschten Abstand voneinander ermöglichen.

Wie bereits erwähnt, ist das erfindungsgemäße Flugzeugsystemträgerelement zur Montage an einer Außenfläche einer Flugzeugcompartmentwand vorgesehen. Flugzeugcompartments werden üblicherweise mit Hilfe entsprechender Halter an einer Flugzeugstruktur befestigt. Die Halter erstrecken sich üblicherweise von den Flugzeugcompartmentwänden in Richtung der Flugzeugstruktur. Um die Montage des Flugzeugcompartments an der Flugzeugstruktur nicht zu behindern, ist in dem Grundkörper des erfindungsgemäßen Flugzeugsystemträgerelements daher mindestens eine Aussparung zur Aufnahme eines Halters zur Befestigung des Flugzeugcompartments an der Flugzeugstruktur ausgebildet. Beispielsweise kann die Rückwand des Grundkörpers mit einer Aussparung oder mehreren Aussparungen versehen sein, durch die sich im an einer Flugzeugcompartmentwand montierten Zustand des Flugzeugsystemträgerelements ein Halter oder mehrere Halter zur Befestigung des Flugzeugcompartments an der Flugzeugstruktur erstreckt/erstrecken. Alternativ oder zusätzlich dazu kann jedoch auch eine der Rückwand gegenüberliegende Komponente des Grundkörpers, d.h. die Leitungskanalabdeckung und/oder die Klimakanalabdeckung mit einer Aussparung oder mehreren Aussparungen zur Aufnahme eines Halters oder mehrerer Halter zur Befestigung des Flugzeugcompartments an der Flugzeugstruktur versehen sein.

Das erfindungsgemäße Flugzeugsystemträgerelement kann ferner eine Seitenwand umfassen, die im Bereich des Leitungskanals mit dem Grundkörper verbunden und mit entsprechenden Durchführungen zum Führen der zur Versorgung des Flugzeugcompartments vorgesehenen Leitungen in den Leitungskanal bzw. aus dem Leitungskanal versehen ist. Vorzugsweise umfasst das Flugzeugsystemträgerelement zwei Seitenwände, die den Leitungskanal beidseitig verschließen. Die Seitenwand oder die Seitenwände können integriert mit dem Grundkörper oder als separates Bauteil/separate Bauteile ausgebildet sein. Ein mit Seitenwänden versehener Leitungskanal bietet einen besonders guten Schutz der in dem Leitungskanal verlegten Leitungen vor äußeren Einflüssen.

Die Größe und die Form des erfindungsgemäßen Flugzeugsystemträgerelements sind vorzugsweise an die Größe und die Form einer Flugzeugcompartmentseitenwand angepasst, an der das Flugzeugsystemträgerelement montiert werden soll. Beispielsweise kann sich das Flugzeugsystemträgerelement großflächig über eine Flugzeugcompartmentseitenwand erstrecken. Alternativ dazu ist es jedoch auch denkbar, entlang einer Seitenwand eines Flugzeugcompartments mehrere erfindungsgemäße Flugzeugsystemträgerelemente hintereinander anzuordnen.

Eine bevorzugte Ausführungsform eines erfindungsgemäßen Flugzeugsystemträgerelements wird nun anhand der folgenden schematischen Zeichnungen näher erläutert, von denen
- Figur 1: eine dreidimensionale Darstellung einer Rückwand eines Flugzeugsystemträgerelementgrundkörpers zeigt,
- Figur 2: eine Draufsicht der Rückwand des Flugzeugsystemträgerelementgrundkörpers gemäß Figur 1 zeigt,
- Figur 3: eine dreidimensionale Darstellung eines Flugzeugsystemträgerelementgrundkörpers mit einer Rückwand und einer Klimakanalabdeckung zeigt,
- Figur 4: eine dreidimensionale Darstellung eines Flugzeugsystemträgerelements mit einem Grundkörper zeigt, der eine Rückwand, eine Klimakanalabdeckung und eine Leitungskanalabdeckung umfasst,
- Figur 5: eine dreidimensionale Darstellung eines Flugzeugsystemträgerelements gemäß Figur 4 im an einer Flugzeugcompartmentwand montierten Zustand zeigt, und
- Figur 6: eine weitere dreidimensionale Darstellung des Flugzeugsystemträgerelements gemäß Figur 4 im an einer Flugzeugcompartmentwand montierten Zustand zeigt.

Ein in den Figuren gezeigten Flugzeugsystemträgerelement 10 umfasst einen Grundkörper 12, der aus einem schall- und wärmeisolierenden Schaum, wie z.B. PU-Schaum, PF-Schaum oder PMI-Schaum oder aus einem Holzmaterial, wie z.B. Baltek^{®} besteht. Der Grundkörper 12 umfasst eine Rückwand 13, die eine Halbschale eines Klimakanals 14 sowie eine Halbschale eines Leitungskanals 16 umfasst.

Zur Bildung des einen ovalen Querschnitt aufweisenden Klimakanals 14 ist die Rückwand 13 mit einer Klimakanalabdeckung 18 verklebt. Eine Innenfläche des Klimakanals 14 ist mit einer Beschichtung versehen, um zu gewährleisten, dass die Oberflächenrauhigkeit der Klimakanalinnenfläche einen vorbestimmten Wert nicht überschreitet. Im Betrieb des Klimakanals 14, d.h. dann, wenn der Klimakanal 14 des Flugzeugsystemträgerelements 10 mit einer Flugzeugklimaanlage verbunden ist und von durch die Flugzeugklimaanlage bereitgestellter Luft durchströmt wird, wird durch die auf die Klimakanalinnenfläche aufgebrachte Beschichtung eine Störung der Luftströmung durch den Klimakanal 14 verhindert. Darüber hinaus dichtet die auf die Innenfläche des Klimakanals 14 aufgebrachte Beschichtung den Klimakanal 14 ab, was insbesondere dann vorteilhaft ist, wenn der Grundkörper 12 des Flugzeugsystemträgerelements 10 aus einem porösen Schaummaterial besteht.

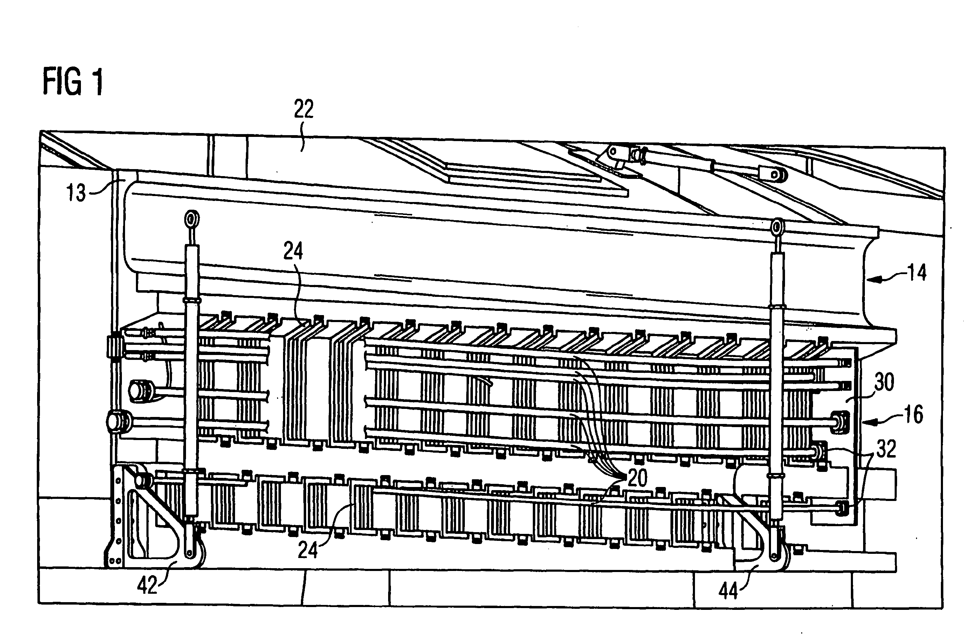

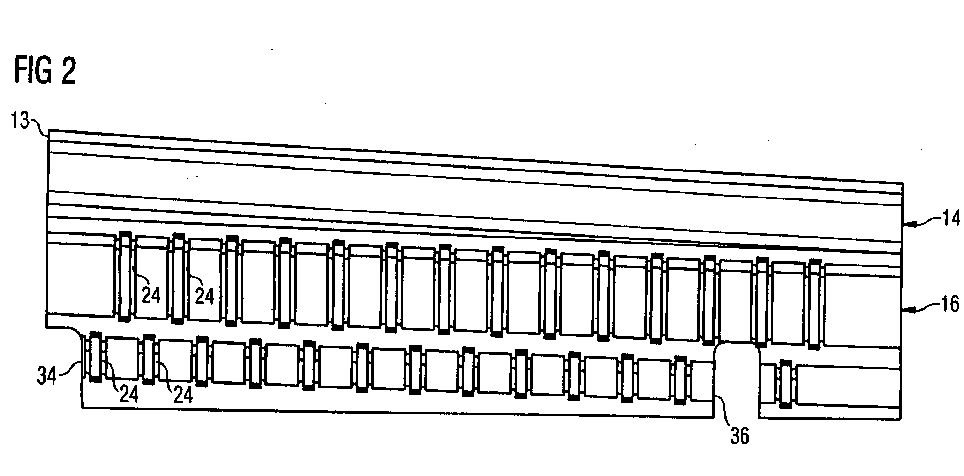

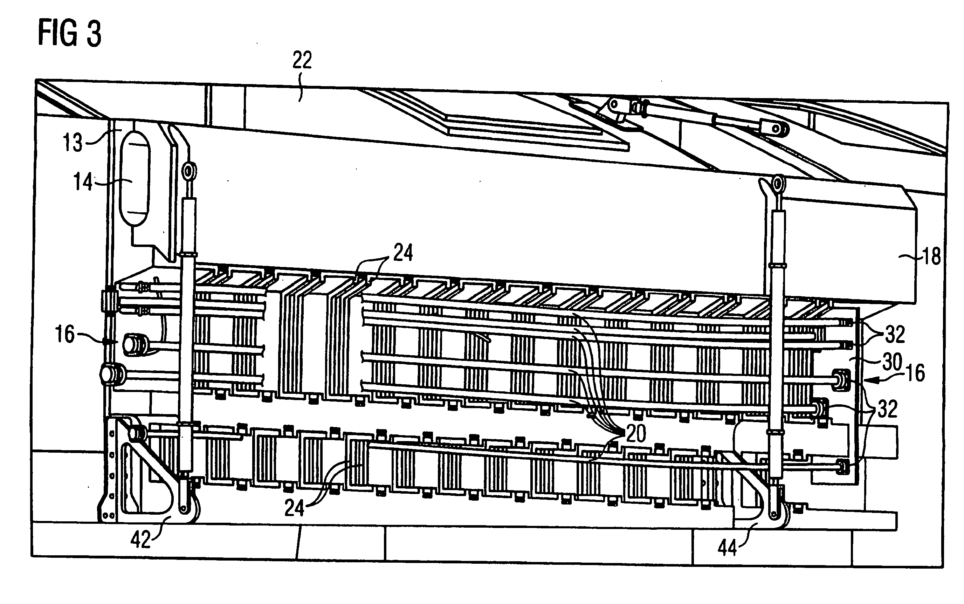

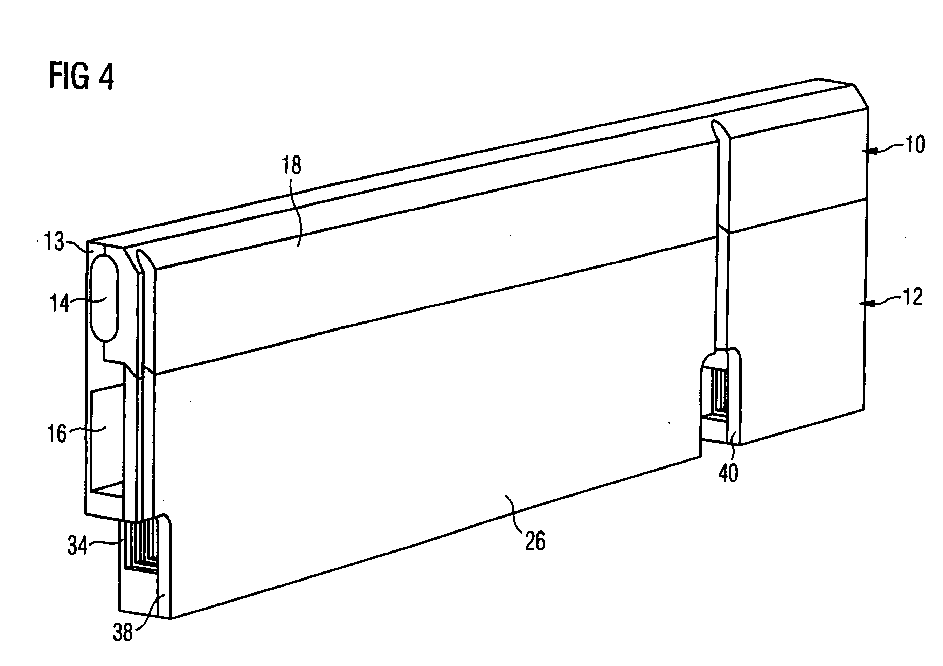

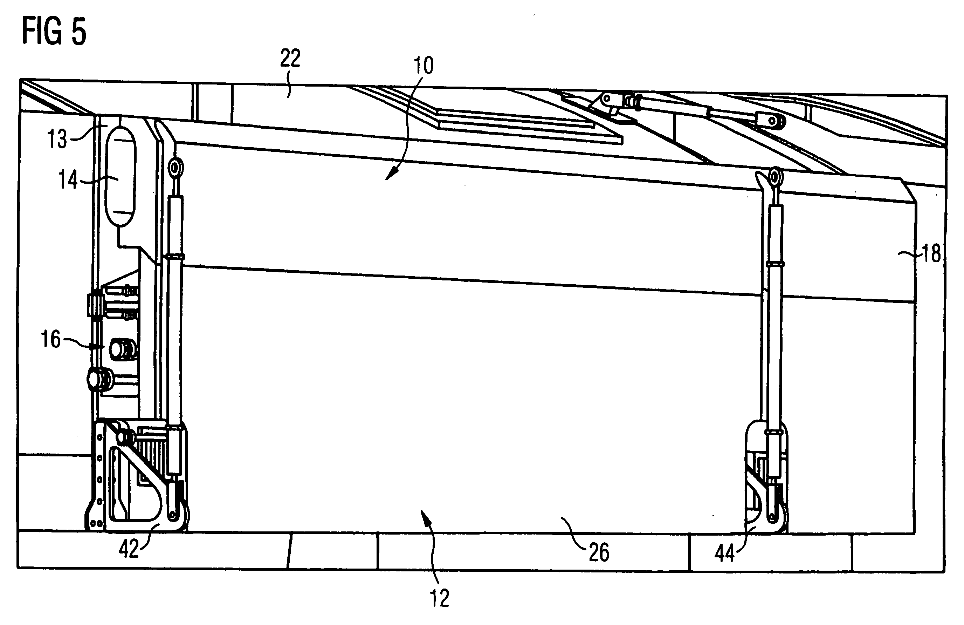

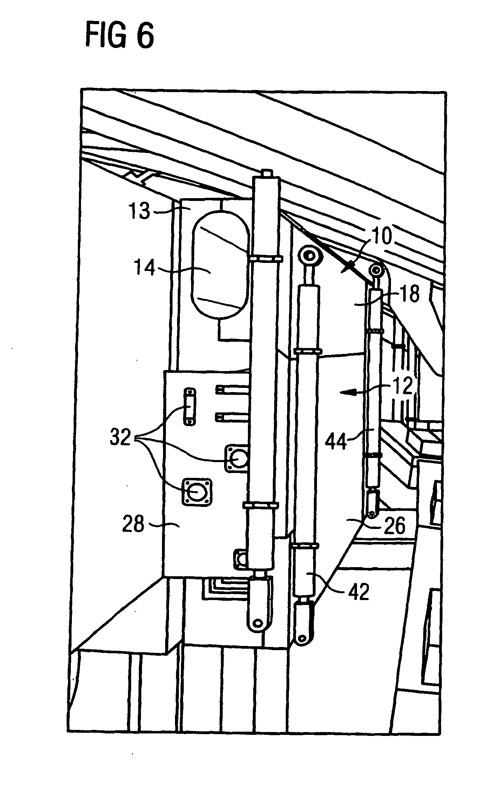

In dem Leitungskanal 16, der in dem Grundkörper 12 ausgebildet ist, ist eine Reihe von Leitungen 20, wie z.B. elektrische Leitungen und Sauerstoffleitungen verlegt. Die Leitungen 20 dienen, ebenso wie der Klimakanal 14, der Versorgung eines Flugzeugcompartments 22. Wie in den Figuren 1 bis 3 zu erkennen ist, ist in dem Leitungskanal 16 eine Mehrzahl von Aufnahmen 24 angeordnet. Die Aufnahmen 24 dienen dazu, in den Figuren nicht gezeigte Leitungsbefestigungseinrichtungen zur Verlegung der Leitungen 20 in einem gewünschten Abstand voneinander in dem Leitungskanal 16 anzubringen. Der Leitungskanal 16 ist mittels einer lösbar an der Rückwand 13 befestigten Leitungskanalabdeckung 26 (siehe Figuren 4 bis 6) verschlossen. Die in dem Leitungskanal 16 verlegten Leitungen 20 sind dadurch gut vor Umgebungseinflüssen geschützt. Zu Wartungszwecken sind die Leitungen 20 jedoch durch die lösbare Befestigung der Leitungskanalabdeckung 26 gut zugänglich.

Wie bereits erwähnt, dienen der Klimakanal 14 sowie die durch den Leitungskanal 16 geführten Leitungen 20 der Versorgung des Flugzeugcompartments 22. Zu diesem Zweck ist der Klimakanal 14 mit einer in einer Flugzeugcompartmentwand ausgebildeten Klimatisationslufteinlassöffnung (in den Figuren nicht gezeigt) verbunden. Die durch den Leitungskanal 16 geführten Leitungen 20 sind an entsprechende in dem Flugzeugcompartment 22 angeordnete Verbraucher angeschlossen. Zur Verbindung der Leitungen 20 mit den im Inneren des Flugzeugcompartments 22 angeordneten Verbrauchern werden die Leitungen 20 durch in den Figuren nicht gezeigte Durchführungen, die in der Rückwand 13 des Grundkörpers 12 im Bereich des Leitungskanals 16 ausgebildet sind, aus dem Flugzeugsystemträgerelement 10 hinausgeführt. Im an einer Flugzeugcompartmentwand montierten Zustand des Flugzeugsystemträgerelements 10 fluchten die in der Rückwand 13 des Flugzeugsystemträgerelementgrundkörpers 12 ausgebildeten Durchführungen mit entsprechenden Durchführungen in der Flugzeugcompartmentwand.

Wie insbesondere in den Figuren 1, 3 und 6 zu erkennen ist, umfasst das Flugzeugsystemträgerelement 10 ferner zwei Seitenwände 28, 30, die im Bereich des Leitungskanals 16 mit dem Grundkörper 12 verbunden sind und somit den Leitungskanal 16 seitlich verschließen. In den Seitenwänden 28, 30 sind entsprechende Durchführungen 32 zum Führen der Leitungen 20 in den Leitungskanal 16 bzw. aus dem Leitungskanal 16 vorgesehen.

Das Flugzeugsystemträgerelement 10 erstreckt sich großflächig entlang einer Wand des Flugzeugcompartments 22 und sorgt dadurch für eine optimale Schall- und Wärmeisolierung des Flugzeugcompartments 22. Auf eine zusätzliche akustische und thermische Isolierung des Flugzeugcompartments 22 kann daher verzichtet werden.

Um eine Befestigung des Flugzeugcompartments 22 an einer Flugzeugstruktur nicht zu verhindern, ist der Grundkörper 12 des Flugzeugsystemträgerelements 10 mit Aussparungen 34, 36, 38, 40 versehen, die im an der Flugzeugcompartmentwand montierten Zustand des Flugzeugsystemträgerelements 10 entsprechende Halter 42, 44 zur Befestigung des Flugzeugcompartments 22 an der Flugzeugstruktur aufnehmen. Erste Aussparungen 34, 36 sind in der Rückwand 13 des Grundkörpers 12 ausgebildet. Zweite Aussparungen 38, 40 erstrecken sich dagegen in der Leitungskanalabdeckung 26 und der Klimakanalabdeckung 18 und umfassen jeweils einen die Leitungskanalabdeckung 26 vollständig durchsetzenden sowie einen in Form einer Vertiefung in der Leitungskanalabdeckung 26 und der Klimakanalabdeckung 18 ausgebildeten Abschnitt.

## Patentansprüche

1. Flugzeugsystemträgerelement (10) mit einem aus einem schall- und wärmeisolierenden Material bestehenden Grundkörper (12), in dem ein mit einer Flugzeugklimaanlage verbindbarer und zur Versorgung eines Flugzeugcompartments (22) vorgesehener Klimakanal (14) sowie ein Leitungskanal (16) zur Aufnahme von zur Versorgung des Flugzeugcompartments (22) vorgesehenen Leitungen (20) ausgebildet sind, **dadurch gekennzeichnet, dass** der Grundkörper (12) eine Rückwand (13) sowie eine lösbar an der Rückwand (13) befestigte Leitungskanalabdeckung (26) umfasst.

2. Flugzeugsystemträgerelement nach Anspruch 1,
**dadurch gekennzeichnet, dass** der Grundkörper (12) aus einem schall- und wärmeisolierenden Schaum besteht.

3. Flugzeugsystemträgerelement nach Anspruch 1 oder 2,
**dadurch gekennzeichnet, dass** der Grundkörper (12) eine mit der Rückwand (13) verklebbare Klimakanalabdeckung (18) umfasst.

4. Flugzeugsystemträgerelement nach einem der Ansprüche 1 bis 3,
**dadurch gekennzeichnet, dass** in der Rückwand (13) des Grundkörpers (12) im Bereich des Leitungskanals (16) mindestens eine Durchführung zum Führen einer zur Versorgung des Flugzeugcompartments (22) vorgesehenen Leitung (20) aus dem Flugzeugsystemträgerelement (10) in das Flugzeugcompartment (22) ausgebildet ist.

5. Flugzeugsystemträgerelement nach einem der Ansprüche 1 bis 4,
**dadurch gekennzeichnet, dass** der Klimakanal (14) eine oberflächenbearbeitete und/oder beschichtete Innenfläche aufweist, deren Oberflächenrauhigkeit einen vorbestimmten Wert nicht überschreitet.

6. Flugzeugsystemträgerelement nach einem der Ansprüche 1 bis 5,
**dadurch gekennzeichnet, dass** in dem Leitungskanal (16) eine Mehrzahl von Aufnahmen (24) zur Anbringung von Leitungsbefestigungseinrichtungen in dem Leitungskanal (16) angeordnet sind.

7. Flugzeugsystemträgerelement nach einem der Ansprüche 1 bis 6,
**dadurch gekennzeichnet, dass** in dem Grundkörper (12) mindestens eine Aussparung (34, 36, 38, 40) zur Aufnahme eines Halters (42, 44) zur Befestigung des Flugzeugcompartments (22) an einer Flugzeugstruktur ausgebildet ist.

8. Flugzeugsystemträgerelement nach einem der Ansprüche 1 bis 7,
**dadurch gekennzeichnet, dass** das Flugzeugsystemträgerelement (10) eine Seitenwand (28, 30) umfasst, die im Bereich des Leitungskanals (16) mit dem Grundkörper (12) verbunden und mit entsprechenden Durchführungen (32) zum Führen der zur Versorgung des Flugzeugcompartments (22) vorgesehenen Leitungen (20) in den Leitungskanal (16) bzw. aus dem Leitungskanal (16) versehen ist.

9. Flugzeugsystemträgerelement nach einem der Ansprüche 1 bis 8,
**dadurch gekennzeichnet, dass** die Größe und die Form des Flugzeugsystemträgerelements (10) an die Größe und die Form einer Flugzeugcompartmentwand angepasst sind.

## Claims

1. Aircraft system carrier element (10) comprising a basic body (12) made of a sound- and heat-insulating material, in which are formed an air conditioning duct (14), which is connectable to an aircraft air conditioning system and provided for supplying an aircraft compartment (22), and a line duct (16) for receiving lines (20) that are provided for supplying the aircraft compartment (22), **characterized in that** the basic body (12) comprises a rear wall (13) as well as a line duct cover (26) that is fastened detachably to the rear wall (13).

2. Aircraft system carrier element according to claim 1,
**characterized in that** the basic body (12) is made of a sound- and heat-insulating foam.

3. Aircraft system carrier element according to claim 1 or 2,
**characterized in that** the basic body (12) comprises a rear wall (13) as well as an air-conditioning duct cover (18) that is glueable to the rear wall (13).

4. Aircraft system carrier element according to any one of claims 1 to 3,
**characterized in that** in the rear wall (13) of the basic body (12) at least one leadthrough is formed in the region of the line duct (16) for leading a line (20) provided for supplying the aircraft compartment (22) out of the aircraft system carrier element (10) into the aircraft compartment (22).

5. Aircraft system carrier element according to one of claims 1 to 4,
**characterized in that** the air conditioning duct (14) has a surface-machined and/or coated inner surface, the surface roughness of which does not exceed a predetermined value.

6. Aircraft system carrier element according to one of claims 1 to 5,
**characterized in that** in the line duct (16) a plurality of receivers (24) are disposed for mounting line-fastening devices in the line duct (16).

7. Aircraft system carrier element according to one of claims 1 to 6,
**characterized in that** in the basic body (12) at least one cutout (34, 36, 38, 40) is formed for receiving a holder (42, 44) for fastening the aircraft compartment (22) to an aircraft structure.

8. Aircraft system carrier element according to one of claims 1 to 7,
**characterized in that** the aircraft system carrier element (10) comprises a side wall (28, 30), which is connected to the basic body (12) in the region of the line duct (16) and provided with appropriate leadthroughs (32) for leading the lines (20) provided for supplying the aircraft compartment (22) into the line duct (16) and/or out of the line duct (16).

9. Aircraft system carrier element according to one of claims 1 to 8,
**characterized in that** the size and the shape of the aircraft system carrier element (10) are adapted to the size and the shape of an aircraft compartment wall.

## Revendications

1. Elément support de système pour avion (10) comportant un corps de base (12) composé d'un matériau insonorisant et calorifuge, dans lequel corps sont formés un canal de climatisation (14) pouvant être relié à une installation de climatisation d'avion et destiné à l'approvisionnement d'un compartiment d'avion (22), ainsi qu'un canal de conduites (16) conçu pour recevoir des conduites (20) destinées à l'approvisionnement dudit compartiment d'avion (22), **caractérisé en ce que** ledit corps de base (12) comporte une paroi arrière (13) ainsi qu'une plaque de recouvrement (26) fixée de manière amovible à ladite paroi arrière (13).

2. Elément support de système pour avion selon la revendication 1,
**caractérisé en ce que** le corps de base (12) se compose d'une insonorisant et calorifuge.

3. Elément support de système pour avion selon la revendication 1 ou 2,
**caractérisé en ce que** le corps de base (12) comprend une plaque de recouvrement de canal de climatisation pouvant être collée sur la paroi arrière (13).

4. Elément support de système pour avion selon l'une des revendications 1 à 3,
**caractérisé en ce qu'**il est réalisé dans la paroi arrière (13) du corps de base (12), dans la zone du canal de conduites (16), au moins un passage pour amener dans le compartiment d'avion (22) une conduite (20) destinée à l'approvisionnement du compartiment d'avion (22) et provenant de l'élément support de système pour avion (10).

5. Elément support de système pour avion selon l'une des revendications 1 à 4,
**caractérisé en ce que** le canal de climatisation (14) présente une surface intérieure revêtue et/ou traitée en surface dont la rugosité superficielle n'excède pas une valeur prédéterminée.

6. Elément support de système pour avion selon l'une des revendications 1 à 5,
**caractérisé en ce que** plusieurs logements (24) sont disposés dans le canal de conduites (16) pour permettre le montage de dispositifs de fixation de conduites dans celui-ci.

7. Elément support de système pour avion selon l'une des revendications 1 à 6,
**caractérisé en ce qu'**il est prévu dans le corps de base (12) au moins un évidement (34, 36, 38, 40) conçu pour recevoir un support (42, 44) servant à fixer le compartiment d'avion (22) sur une structure d'avion.

8. Elément support de système pour avion selon l'une des revendications 1 à 7,
**caractérisé en ce que** l'élément support de système pour avion (10) comporte une paroi latérale (28, 30) qui est reliée au corps de base (12) dans la zone du canal de conduite (16) et pourvue de passages correspondants (32) pour amener les conduites (20) destinées à l'approvisionnement du compartiment d'avion (22) dans le canal de conduites (16) et en dehors de celui-ci.

9. Elément support de système pour avion selon l'une des revendications 1 à 8,
**caractérisé en ce que** la taille et la forme de l'élément support de système pour avion (10) sont adaptées à la taille et à la forme d'une paroi de compartiment d'avion.
